# EUROPEAN PATENT APPLICATION

(11) **EP 2 101 541 A1**
(43) Date of publication of application: **16.09.2009**
(21) Application number: 08380092.0
(22) Date of filing: 14.03.2008
(51) Int. Cl.: H04W 88/08

(54) **Radio head for roads or rurual environments**

(71) Applicant: Vodafone Group PLC, Newbury Berkshire RG14 2FN (GB); Vodafone España, S.A., 28108 Alcobendas (ES)
(72) Inventor: Le Pézennec, Yannic, 28003 Madrid (ES); Koehler, Robert, 28036 Madrid (ES); Arranz Arauz, Miguel, 28050 Madrid (ES)
(74) Representative: Carpintero Lopez, Francisco

(57) **Abstract**

The invention refers to a radio head for road or urban environments which road or environment includes a number K of sectors to be covered, the radio head comprises:
- a number K of two-port antennas (10, 10', 10"), each antenna arranged to provide coverage to each of said sectors, respectively;
- each of said antennas is connected via a first port to one duplexer (23, 23', 23") of a number K of duplexers in an MCPA remote radio unit (20), which remote radio unit comprises a digital processing means (24);
- each duplexer is in turn connected to an MCPA (21, 21', 21");
and characterised in that the radio head further comprises:
- a number of K receiver units RXU (30, 30'), each receiver unit being connected between the digital processing means and a second port of each antenna, respectively.

## Description

### Field of the invention

The invention is encompassed within the field of mobile communications, and more specifically in expanding coverage in rural areas or roads.

### Background of the invention

It is well-known that abbreviations and acronyms are frequently used in the mobile telephony field. Below is a glossary of acronyms and terms used throughout the present specification:
- 2G: Second Generation of Mobile Service, also known as GSM.
- 3G: Third Generation of Mobile Service, also known as UMTS.
- BTS: Base Transceiver Station
- Cell Broadcast: 3GPP service that allows the simultaneous broadcast of messages to some or all mobile users within a cell or group of cells.
- CPRI: Common Public Radio Interface.- MCPA: Multi Carrier Power Amplifier.
- OBSAI: Open Base Station Architecture Initiative.
- PA: Power Amplifier.
- RRH: Remote Radio Head.
- RRU: Remote Radio Unit.
- RX: Reception/Receiver.
- SCPA: Single Carrier Power Amplifier.
- TRX: Transceiver and Receiver element in 2G, associated to each 2G carrier.
- TX: Transmission/Transmitter.

The Remote Radio Head (RRH) concept in mobile communications is a well-known developed architecture of BTS. It basically consists in physically separating the baseband equipment (in charge of baseband processing of the signal, for GSM, 3G, WiMAX, LTE or whichever the mobile communications protocol) and the radio equipment (in charge of transmitting and receiving over the air interface the signal, including amplification/reception, filtering and modulation/demodulation of the base band signal into/to electro magnetic radio waves). These two portions are usually referred as Base Band Unit (BBU) and Radio Remote Unit (RRU). Both parts of the equipment are connected through a fibre cable that transports the radio signal from BBU to RRU and vice versa. This solution splits the otherwise bulky equipment into smaller pieces, hence allowing to install the RRU very close to the antenna so that typically 1-3 dB losses in the transmit signal is avoided. Some of the benefits of using RRH are the following:
*A*. *Less footprint required:* BBU and RRU are relatively small equipment that can be placed much more flexibly than the previous BTS that usually required one or several cabinets.
*B. More power into the antenna feeder:* As the RRU can be placed immediately after the antenna feeder, typical coaxial cable losses are avoided, both in downlink and uplink directions. This typically provides an immediate benefit of 3 dB in terms of coverage for the same equipment output power.
*C. Energy efficiency*: In the conventional architecture, the antenna and equipment were connected through a coaxial cable that dissipated around 50% of the total equipment output power. This is now avoided, allowing a much reduced power consumption in the overall site. As the RRU is placed outdoors and optimized in terms of self-cooling, the conventional cooling systems in the site can be avoided, which further increases the overall energy efficiency of the infrastructure.
*D. Easier and cheaper installation:* The lack of cooling system, reduced footprint, coaxial cable and even shelter, make the installation of RRH much faster, simpler and cheaper than the conventional solution.

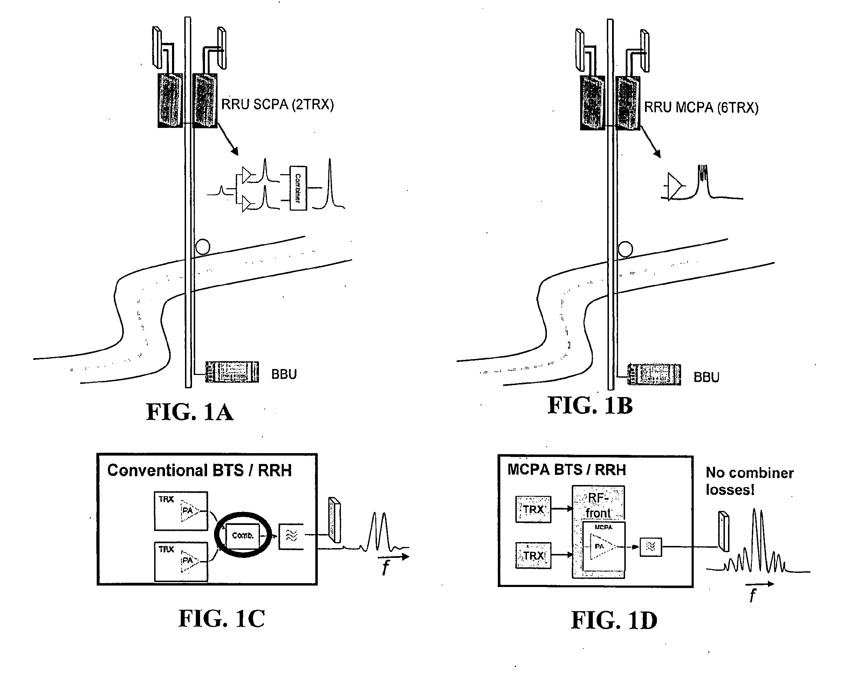

Expanding coverage in rural areas or roads is a challenge for mobile operators in emerging countries. One of the keys of this challenge relies on the need of an easy installation and reduced equipment footprint, while keeping requirements in terms of coverage. In fact, the deployment of coverage in such emerging countries is constrained by the typical low revenue/customer in such markets. Cheap and easy to roll out coverage solutions are a key enabler for the development of the mobile coverage in such environments. The conventional 2G RRH -Remote Radio Head- (shown in figure 1A) based on a single carrier PA design offers a possible solution to ease the roll out, but it still requires one Remote Radio Unit (RRU) per sector; this fact jeopardizes its usability for sites for stretched coverage -like roads or villages-, where typically two sectors are required. The newer 2G MCPA Remote Radio Head (shown in figure 1B) with a 2T,2R -2 Transmitters, 2 Receivers- internal architecture offers an additional solution, that extends the benefit of RRH to medium and high capacity environments. MCPA additionally allows for dynamic power sharing across TRXs, which can ultimately be used to increase downlink coverage. However, environments like roads, requiring simultaneously low capacity, high coverage and small volume are still unresolved, as two RRUs are required for a typical two sector site (one per sector).

It is known that radio equipment uses Power Amplifiers (PAs), filters and receivers selected to comply with the requirements of the working frequency band and channel bandwidth of the mobile protocol (GSM, W-CDMA, other). The GSM channel bandwidth is 200 KHz, while the W-CDMA channel bandwidth is 5 MHz. In GSM the minimum required bandwidth for a PA was taken, i.e. 200 kHz and a single Carrier PA (1 carrier/PA). The appearance of MCPA (Multi Carrier Power Amplifier) radios in 3G (with typical bandwidths of 20 MHz) opens the possibility of using the same equipment for different carriers in 3G. This MCPA usage can be adopted in 2G as well, with the following benefits and challenges:

### 1. Benefits of MCPA in 2G

The first benefit has to do with the fact that there a combiner is no longer needed to feed the transmitted signal into a single antenna port. Such combiner implies losses that are typically 3-5 dB, and which were simply wasted in terms of output power and energy efficiency with the old SCPA technology.

The second benefit is related to the size and weight that same number of carriers would require in an SCPA design. As the number of internal elements is reduced, the overall footprint for the same capacity and performance can be reduced, because typically there is more than one TRX which results in several PA components in an SCPA design.

The third benefit is related to the possibility of dynamic and flexible power sharing across TRXs. In SCPA technology each TRX has a maximum output power, and each TRX is isolated from the others. Through MCPA, the overall power of the PA is shared across the different TRX, hence a certain mobile connection that does not require maximum output power can lend the spare output power to another TRX. A flexible and dynamic management of this capability results in an increased capacity and coverage for same overall aggregated maximum output power of the system.

The fourth benefit is the possibility of using the same equipment for new technologies with the same MCPA design approach (e.g. WB-DCMA, LTE). Then the MCPA could be used even in multimode operation, as long as the operating frequency is the same or the bandwidth of the PA covers the operating frequencies of the different technologies. The first initial application of this is seen for 2G and 3G in the 900 MHz band.

### 2. Challenges for usage of MCPA in 2G

The 2G or GSM signal is typically modulated with a non-amplitude-changing GSMK modulation, therefore the PA can be set at the saturated working point if it is connected to only one TX signal, i. e. high output power at normal supply voltage. In the case of several TRXs connected to one MCPA, the signal has a changing amplitude, which implies that the so-called peak-to-average-ratio of the signal is higher the more TRXs are connected. Especially in the worst case, if the carrier spacing is homogenous due to modulation like multiplication in mathematics, so-called intermodulation products of higher order are created, which also disturbs adjacent frequency channels, if the output signal is not sufficiently filtered or if the supply voltage of the PA is not set to a lower working point. Therefore this makes the fulfilment of the GSM radio mask standards much harder with an efficient product, in particular in the 900 band, because the standard there is stricter than in 1800 MHz band. More precisely, the 3rd products of inter modulation of different carriers in GSM can fall close or within the band of operation of the operating carriers. This effect is further underlined as the operating frequencies increase and as the operating frequencies are more distant in the working GSM band.

Patent application CN-1801974-A describes the technology multi-carrier power amplifier (MCPA) within a base station, which reduces power loss and system complexity, and eases installation and maintenance tasks.

### Summary of the invention

The invention refers to a radio head for roads or rural environments according to claim 1. Preferred embodiments of the radio head are defined in the dependent claims.

The drawbacks described in the previous section can be largely mitigated according to the present invention, through the usage of two MCPAs within the same 2G RRU, each one with half the output power, half the bandwidth and half the capacity. This improves the sensitivity of each MCPA, yielding to a much easier accomplishment of the 3GPP spectrum mask.

The invention refers to a radio head for roads and rural environments, which road or environment includes a number K of sectors to be covered, the radio head comprises:
- a number K of two-port antennas, each antenna arranged to provide coverage to each of said sectors, respectively.

According to a first aspect of the invention in the radio head:
- each of said antennas is connected via a first port to one duplexer of a number K of duplexers in an MCPA remote radio unit, which remote radio unit comprises a digital processing means;
- each duplexer is in turn connected to an MCPA;
and the radio head further comprises:
- a number of K receiver units RXU, each receiver unit being connected between the digital processing means and a second port of each antenna, respectively, in order to balance the link budget.

Typically the number of RX paths have to be twice of the number of TX path to have a balanced link budget, if no combiner behind the MCPA attenuates the TX signal.

Thus, the radio head of the present invention combines the known concept of the remote radio head (RRH) with the MCPA technology and a double MCPA per radio unit, enabling a new architecture in the remote radio unit (RRU) that results in an optimized radio equipment for rural environments and roads, fulfilling the coverage and capacity requirements of such environments within a single box (roads or rural environments usually have less capacity requirements than urban or suburban areas).

A preferred embodiment of the radio head of the present invention has been developed for a road or rural environment having two sectors, K=2; in such a case, the two two-port antennas have crossed polarisations.

The radio head of the invention includes two MCPAs and two receivers within a single RRU, and two additional receivers are further added to the radio head (either as separate box or embedded in the radio head). These two additional receivers do not add significant volume nor weight (since the strength of the reception signal is low), and they provide a combination in the reception; therefore, the receive diversity is still in place (no compromise in terms of uplink coverage), while the downlink coverage remains unaffected thanks to the dynamic power sharing enabled by MCPA technology and the uplink-limited link budget due to the two way-diversity. The result is a two sector site requiring only one RRU, and able to provide half of the capacity, particularly suited to cover roads or other rural environments.

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:
Figure 1A and Figure 1B show a conventional 2G SCPA remote radio head and a conventional 2G MCPA remote radio head, respectively, for coverage in a road.
Figure 1C shows the conventional design within the RRU, i. e. connection of several TRXs to the single carrier PAs in comparison to Figure 1D where several TRXs in a new MCPA design are connected only to 1 MCPA.
Figure 2 shows the lay-out of a remote radio head with double MCPA., covering only one sector.
Figure 3 shows the lay-out of the radio head for roads or rural environments of the present invention, with an MCPA design and a two-sector capability.
Figure 4 shows a design of the additional receiver unit RXU.
Figure 5 shows the lay-out of the radio head for roads or rural environments of the present invention, with an MCPA design and a K sector capability.

### Detailed description of the preferred embodiments

Reference will now be made in detail to a preferred embodiment of the radio head of the present invention.

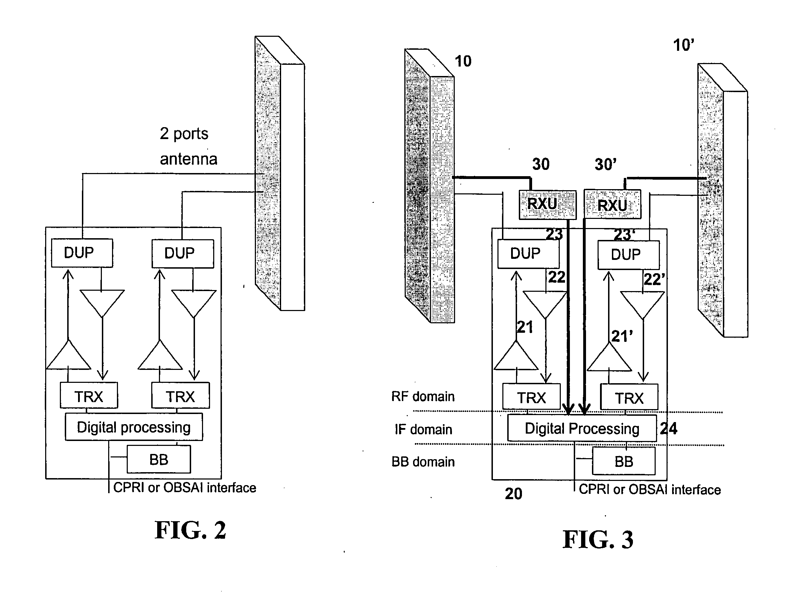

As explained before, figure 1A shows how a remote radio head for providing coverage in a road is assembled with SPCA design; and figure 1B shows the radio head assembled with MCPA design. The design of both options and the connection between the TRX processing and the PAs is shown in Figure 1C and Figure 1D, respectively. Figure 1C shows how each TRX is connected to a single carrier power amplifier SCPA, and thus there is a need for a combiner. Then, with the MPCA design, the TRXs are connected to a multiple carrier power amplifier, MCPA, where a combiner is no longer necessary, and therefore the corresponding combiner losses are avoided. Also, figure 2 shows a modified architecture for a radio head with double MCPA. In this case, the two ports of the antenna are in use both in TX and in RX.

However, in all these three cases, as explained in the *Background of the Invention,* one RRU per sector is needed.

According to the remote radio head of the present invention (as shown in figure 3), there is a single RRU for two sectors.

The radio head includes a first two-port antenna 10 and a second two-port antenna 10'. These first and second two-port antennas have crossed polarisations, in order to provide coverage to two sectors.

The radio head further includes a double MCPA remote radio unit 20, to which the antennas are connected, and which comprises two MCPAs 21, 21' and two receiver units 22, 22'. So, the reception configuration is reused in TX, connecting each MCPA to each of the antenna ports (different polarized antennas), hence avoiding any combining losses while keeping all the rest performance parameters.

In order to provide coverage for roads or rural environments (which usually have less capacity requirements than urban or suburban areas), two additional receiver units RXU 30, 30' are included in the radio head of the present invention. As these two additional receiver units provide a combination in the reception, the receiving diversity is accomplished (no compromise in terms of uplink coverage), while the downlink coverage remains unaffected due to the dynamic power sharing enabled by MCPA technology.

The additional receiver units RXUs 30, 30' are directly connected to an IF digital processing means in the interfrequency (IF) domain, where the signals are processed with the other RX paths coming from the TRX processing, so that the 2- way RX diversity gain per sector is achieved and the link budget in each sector is balanced. Otherwise the output power of the radio unit would be too high due to the lack of a combiner after the MCPA, i. e. the link budget would be unbalanced.

As in a conventional design, the interfrequency domain is connected to the base band (BB) domain. Typically the BB domain of GSM is in the RRU and the BB domain of WB-CDMA is in the BBU. The RRU and the BBU can be connected like in the conventional design via the CPRI and OBSAI interface, independently if the BB domain is located in the RRU or not.

The result of the remote radio head of the invention with two receiver units RXU is a two sector site which requires only one RRU 20.

Cost and installation complexity are almost halved, while difficulty in terms of development of the product and integration are minimum.

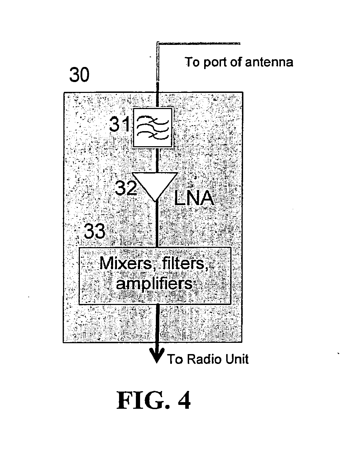

A possible design of a the additional receiver unit RXU is shown in figure 4. Each further receiver unit RXU consists of a bandfilter 31, a low noise amplifier LNA 32 and mixers, further filters and amplifiers 33 in order to process in the RF domain the receiving signals in one path to the digital processing means 24 in the interfrequency (IF) domain located in the MCPA remote radio unit 20.

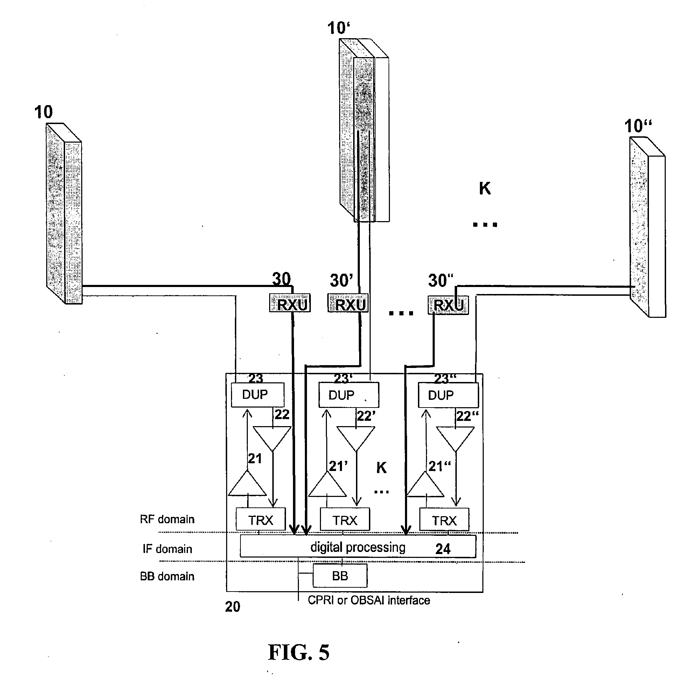

Figure 5 shows the generalisation of the invention, consisting of a radio head for roads or rural environments with an MCPA design and a K sector capability.

The radio head of the present invention can be used for any technology: 2G, 3G, etc. Benefits for the operator rely on reduced footprint, easier installation, and improved energy efficiency while keeping the key performance requirements in terms of coverage for 2G. The solution is still applicable in the case of 3G, although it would prevent the usage of TX diversity to balance the uplink/downlink link budget, hence it would introduce some eventual restrictions regarding coverage. The link budget in 2G does not require TX power diversity with typical MCPA output power, hence applicability is maximized in 2G.

## Claims

1. Radio head for a road or a rural environment which road or environment includes a number K of sectors to be covered, the radio head comprises:
- a number K of two-port antennas (10, 10', 10"), each antenna arranged to provide coverage to each of said sectors, respectively;
**characterised in that**:
- each of said antennas is connected via a first port to one duplexer (23, 23', 23") of a number K of duplexers in an MCPA remote radio unit (20), which remote radio unit comprises a digital processing means (24);
- each duplexer is in turn connected to an MCPA (21, 21', 21");
and **characterised in that** the radio head further comprises:
- a number of K receiver units RXU (30, 30'), each receiver unit being connected between the digital processing means and a second port of each antenna, respectively.

2. Radio head according to claim 1, wherein said road or rural environment has two sectors, K=2, and said two antennas (10, 10') have crossed polarisations.

3. Radio head according to any of claims 1-2, wherein each further receiver unit RXU comprises a bandfilter (31), a low noise amplifier (32) and mixers, further filters and amplifiers (33) in order to process receiving signals in the RF domain to the digital processing means (24) in the interfrequency domain located in the MCPA remote radio unit (20).
